# FASCICULE DE BREVET EUROPEEN

(11) **EP 0 412 917 B1**
(45) Date de publication et mention de la délivrance du brevet: **25.09.1996**
(21) Numéro de dépôt: 90420363.5
(22) Date de dépôt: 31.07.1990
(51) Int. Cl.: C25B 13/04

(54) **Diaphragme, association d'un tel diaphragme à un élément cathodique et leur procédé d'obtention**
Diaphragma, Verbindung eines solchen Diaphragmas mit einem Kathodenelement und deren Herstellungsverfahren
Diaphragm, association of such a diaphragm with a cathodic element and their process of manufacture

(30) Priorité: 10.08.1989 FR 8910938
(43) Date de publication de la demande: 13.02.1991
(73) Titulaire: RHONE-POULENC CHIMIE, 92408 Courbevoie Cédex (FR)
(72) Inventeur: Bachot, Jean, F-92340 Bourg La Reine (FR); Stutzmann, Pascal, F-75019 Paris (FR)
(74) Mandataire: Dubruc, Philippe

(56) Documents cités:
- EP-A- 0 214 066
- FR-A- 2 495 195
- US-A- 4 606 805
- US-A- 4 647 360

## Description

La présente invention concerne des diaphragmes pour des cellules d'électrolyse, l'association de tels diaphragmes à un élément cathodique et un procédé d'obtention de tels diaphragmes et d'association de tels diaphragmes à un élement cathodique.

Elle vise plus particulièrement des diaphragmes susceptibles d'être produits par voie humide, à base de fibres thermoplastiques et exempts d'amiante, pour des cellules d'électrolyse chlore-soude.

Depuis très longtemps, on utilise des fibres d'amiante comme matière conventionnelle de réalisation des diaphragmes employés dans des cellules d'électrolyse. Ces diaphragmes sont formés par dépôt sur une cathode perméable aux électrolytes, de fibres d'amiante contenues dans une bouillie aqueuse, l'opération de dépôt étant réalisée sous vide. Ainsi dans le brevet français n° 2 213 805, il a été proposé de préparer des séparateurs microporeux par dépôt d'une couche d'amiante, ladite couche étant consolidée par un polymère fluoré. La porosité d'une telle couche peut être mieux contrôlée par addition d'un agent porogène conformément à l'enseignement du brevet français n° 2 229 739.

Comme cela est bien connu de l'homme de l'art, ce type de préparation de séparateurs microporeux par dépôt sous vide d'une bouillie aqueuse renfermant des fibres et un liant présente un très grand intérêt tant sur le plan technique que sur le plan économique. Toutefois la qualité des séparateurs ainsi obtenus n'est pas pleinement satisfaisante en raison de la nécessité d'utiliser des fibres d'amiante. En effet, nonobstant les risques associés à la manipulation de ce produit dangereux pour la santé humaine, la stabilité chimique insuffisante inhérente à l'amiante implique divers inconvénients tels une durée de vie trop courte des séparateurs et des difficultés à modifier les conditions de fonctionnement de l'électrolyseur, par exemple, par une augmentation de l'intensité électrique.

Dans la demande de brevet européen n°132 425 il a été proposé des éléments cathodiques, matériaux composites résultant de l'association d'une cathode élémentaire constituée par une surface métallique fortement poreuse telle une grille métallique présentant un vide de maille compris entre 20 µm et 5 mm et d'une nappe renfermant des fibres et un liant, l'association et la nappe résultant de l'aspiration sous vide programmé d'une suspension, contenant essentiellement des fibres conductrices de l'électricité et un polymère fluoré, directement au travers de ladite cathode élémentaire, suivie du sèchage, puis de la fusion du liant. De tels matériaux composites sont susceptibles de constituer la cathode elle-même d'une cellule d'électrolyse et peuvent être associés à un diaphragme, le diaphragme pouvant être fabriqué directement par voie humide sur le composite.

Divers perfectionnements ont été apportés tant aux matériaux composites eux-mêmes qu'à leur procédé de fabrication.

Dans la demande de brevet européen n° 214 066 il a été proposé des matériaux renfermant des fibres de carbone présentant une distribution monodispersée de longueurs, matériaux dont la qualité et les propriétés sont très sensiblement améliorées, ce qui se traduit par un rapport performance/épaisseur beaucoup plus favorable.

Dans la demande de brevet européen n° 296 076 il a été proposé des matériaux électroactivés renfermant un agent électrocatalytique uniformément réparti dans leur masse, ledit agent étant choisi parmi les métaux de Raney et les alliages de Raney dont on a éliminé la majeure partie du (des) métal (métaux) facilement éliminable(s).

L'ensemble des éléments cathodiques proposés qui assurent une répartition appréciable du courant est susceptible d'être utilisé dans une cellule d'électrolyse qui comprendra une membrane ou un diaphragme entre les compartiments anodique et cathodique. Des détails techniques complémentaires pourront être trouvés dans les demandes de brevets européens précitées, qui sont incorporées par référence pour éviter de plus amples développements sur lesdits éléments cathodiques.

Depuis longtemps également, on a proposé de fabriquer des séparateurs microporeux à base de matières thermoplastiques en recourant aux techniques classiques de conformation des matériaux plastiques telles le malaxage, le moulage, le calandrage et/ou le frittage.

Ainsi dans les brevets français n° 2 280 435 et 2 280 609 il a été proposé de fabriquer des séparateurs microporeux à base de polymères fluorés. Toutefois les diaphragmes plans ainsi obtenus sont difficiles à mettre en place dans les cellules dont les éléments cathodiques présentent des géométries complexes et ils sont très difficilement mouillables. Ces séparateurs dont le coût de fabrication reste relativement très élevé n'ont pas pu être développés de manière satisfaisante.

Par ailleurs, la simple substitution des fibres d'amiante dans les bouillies destinées à la préparation de diaphragmes par dépôt sous vide, par des fibres en matériau tel le polytétrafluoroéthylène (PTFE), qui serait une voie très attractive de préparation de séparateurs microporeux notamment pour des cellules dont les éléments cathodiques présentent une géométrie complexe, ne permet pas d'obtenir des séparateurs microporeux satisfaisants. En effet, la couche de fibres de PTFE se rétracte très fortement lors du frittage, la régularité et la finesse de la porosité sont insuffisantes et l'hydrophilie de la couche de fibres est précaire.

Plus récemment, il a été proposé dans le brevet américain n° 4,680,101 de préparer un diaphragme modifié par imprégnation d'un diaphragme préformé (matrice) au moyen d'une solution dans un solvant organique, d'un alcoxyde métallique partiellement hydrolysé représenté avant hydrolyse par la formule M(OR)₄ dans laquelle M représente le titane, le zirconium, le silicium ou l'aluminium et R est un radical alkyle comportant de 1 à 6 atomes de carbone ; le diaphragme ainsi imprégné est alors chauffé à 90-150°C pour réticuler l'oxyde métallique polymérique.

La matrice est elle-même formée par filtration sous vide sur une cathode d'une bouillie renfermant du polytétrafluoroéthylène fibrillé, le cas échéant, une solution dans l'éthanol d'un échangeur d'ions perfluoré comportant des groupes acides sulfoniques, suivie du séchage de l'ensemble à 120-130°C, sous vide, dans un four. L'échangeur d'ions perfluoré apporte la mouillabilité à un tel diaphragme.

Après la formation de cette matrice et, de préférence, après imprégnation de celle-ci en vue de la pourvoir en oxyde métallique polymérique, il est suggéré d'incorporer au diaphragme déjà formé un gel inorganique tels que des gels d'oxydes de magnésium, de zirconium ou de titane ou un gel de phosphate de zirconyle ; de tels gels seraient susceptibles de réduire la perméabilité aux liquides d'un tel diaphragme et d'apporter des propriétés d'échanges ioniques au dit diaphragme.

Ces diaphragmes imprégnés dont l'intérêt de principe n'est pas contesté présentent divers inconvénients et en particulier un manque d'homogénéité et une perméabilité difficilement contrôlable.

Par ailleurs le procédé de fabrication présente une complexité difficilement compatible avec les exigences industrielles.

Il a maintenant été trouvé qu'il est possible de préparer des séparateurs microporeux exempts d'amiante par voie humide, par aspiration sous vide d'une bouillie aqueuse renfermant des fibres à base de polymère fluoré à travers un support poreux et d'obtenir un séparateur microporeux ne présentant pas les inconvénients précités.

La présente invention a donc pour objet un diaphragme microporeux susceptible d'être formé in-situ par voie humide comprenant une nappe fibreuse, exempte d'amiante, dont les fibres sont microconsolidées par un polymère fluoré, l'ensemble étant fritté, ladite nappe renfermant essentiellement :
- de 3 à 35 % en poids de polymère fluoré, liant des fibres,
- de 0 à 50 % en poids d'un gel d'oxohydroxyde d'au moins un métal des groupes IVA, IVB, VB et ViB de la classification périodique ou des séries des lanthanides et des actinides, et le fer
- de 20 à 95 % en poids d'un mélange de fibres de polytétrafluoroéthylène et de fibres minérales, les fibres minérales étant choisies parmi les fibres de titanates ou un mélange de fibres de titanate, de fibres de graphite ou de carbone, les fibres minérales représentant de 1 à 80 % en poids dudit mélange et la teneur en fibres de carbone ou de graphite ne dépassant pas 10 % en poids dudit mélange.

La présente invention a de même pour objet un diaphragme microporeux susceptible d'être formé in situ par voie humide comprenant une nappe fibreuse, exempte d'amiante, dont les fibres sont microconsolidées par un polymère fluoré, l'ensemble étant fritté, ladite nappe renfermant essentiellement :
- de 3 à 35 % en poids de polymère fluoré, liant les fibres,
- de 5 à 25 % en poids d'un gel d'oxohydroxyde d'au moins un métal des groupes IVA, IVB, VB et VIB de la classification périodique ou des séries des lanthanides et des actinides, et le fer,
- de 20 à 95 % en poids d'un mélange de fibres de polytétrafluoroéthylène et de fibres minérales choisies parmi les fibres de graphite, de carbone ou leur mélange, les fibres minérales représentant de 1 à 10 % en poids dudit mélange.

La présente invention a également pour objet l'association d'un tel diaphragme et d'un élément cathodique composite.

La présente invention a également pour objet un procédé de préparation de tels diaphragmes comprenant essentiellement la succession d'étapes suivantes :
a) la préparation en milieu essentiellement aqueux d'une dispersion comprenant les fibres, le liant à base de polymère fluoré sous forme de particules, le cas échéant au moins un précurseur d'oxohydroxyde d'au moins l'un des métaux des groupes IVA, IVB, VB et VIB de la classification périodique ou des séries des lanthanides et des actinides, et le fer sous forme de particules et, le cas échéant des additifs,
b) le dépôt d'une nappe par filtration sous vide programmé de ladite dispersion à travers un matériau poreux,
c) l'élimination du milieu liquide et, le cas échéant, le séchage de la nappe ainsi formée,
d) le frittage de la nappe et,
e) le traitement, le cas échéant, in-situ dans les conditions de l'électrolyse, par une solution aqueuse d'hydroxyde alcalin.
Le matériau poreux (support) en cause peut être un élément cathodique composite et le procédé permet alors de réaliser une association au sens de la présente invention.

La présente invention a également pour objet un procédé de préparation de telles associations, comprenant essentiellement la succession d'étapes suivantes :
a) le dépôt d'une nappe précathodique par filtration sous vide programmé d'une dispersion en milieu essentiellement aqueux de fibres, de liant sous forme de particules et, le cas échéant d'additifs, à travers une cathode élémentaire constituée d'une surface métallique présentant un vide de maille ou des perforations compris entre 20 µm et 5 mm,
b) l'élimitation du milieu liquide et, le cas échéant, le séchage de la nappe ainsi formée,
c) la filtration sous vide programmé, à travers la nappe précathodique, d'une dispersion en milieu essentiellement aqueux de fibres de polytétrafluoréthylène, de fibres minérales choisies parmi les fibres de carbone, de graphite, de titanate et leurs mélanges, de liant à base d'un polymère fluoré sous forme de particules, le cas échéant au moins un précurseur d'oxohydroxyde d'au moins l'un des métaux des groupes IVA, IVB, VB et VIB de la classification périodique ou des séries des lanthanides et des actinides, et le fer, sous forme de particules, et, le cas échéant des additifs,
d) l'élimination du milieu liquide et, le cas échéant, le séchage de la nappe ainsi formée,
e) le frittage de l'ensemble et,
f) le traitement, le cas échéant in-situ dans les conditions de l'électrolyse, par une solution aqueuse d'hydroxyde alcalin.

Les diaphragmes selon la présente invention présentent une stabilité dimensionnelle appréciable, une porosité fine et régulière et une mouillabilité permanente. Les diaphragmes selon la présente invention présentent en outre des tensions de fonctionnement très basses ce qui constitue un autre avantage de la présente invention.

Les diaphragmes selon la présente invention sont susceptibles d'être obtenus par des voies, classiquement utilisées dans l'industrie, de dépôts d'une suspension par aspiration sous vide et permettent le fonctionnement efficace (rendement en courant très élevé, tension en fonctionnement réduite) des cellules d'électrolyse de saumure les renfermant sous des densités de courant élevées pouvant atteindre 40 A/dm² et davantage. Ils permettent en outre de travailler avec des concentrations de soude élevées (de l'ordre de 140 à 200 g/l ou davantage) dans le catholyte, ce qui limite la consommation énergétique utile à la concentration ultérieure de la soude.

Les diaphragmes selon l'invention comprennent une nappe fibreuse exempte d'amiante. Par nappe on entend un assemblage ou empilement tridimensionnel dont l'épaisseur est sensiblement plus faible que les autres dimensions, ledit assemblage pouvant, le cas échéant, présenter deux surfaces parallèles. Ces nappes peuvent se présenter sous des formes diverses, généralement déterminées par la géométrie des éléments cathodiques auxquels elles pourront être associées. Dans leur utilisation comme diaphragmes microporeux dans des cellules d'électrolyse du chlorure de sodium et à titre indicatif, leur épaisseur est usuellement comprise entre 0,1 et 5 mm, l'une de leurs grandes dimensions, correspondant sensiblement à la hauteur de l'élément cathodique pourra atteindre 1 m, voire d'avantage et l'autre grande dimension, reflétant sensiblement le périmètre de l'élément en cause, atteindra couramment plusieurs dizaines de mètres.

Les fibres de la nappe sont microconsolidées en ce sens qu'elles sont, en quelque sorte, fixée les unes aux autres surtout par un réseau tridimensionnel de points discrets, ce qui contribue à assurer à la nappe une porosité à la fois fine et régulière et une très grande cohésion.

Ces nappes (ou empilements fibreux) selon une première variante de l'invention sont exemptes d'amiante et renferment essentiellement, comme indiqué en tête du présente mémoire :
- de 3 à 35 % en poids de polymères fluoré, liant des fibres,
- de 0 à 50 % en poids d'un gel d'oxohydroxyde d'au moins un métal des groupes IVA, IVB, VB et VIB de la classification périodique ou des séries des lanthanides et des actinides, et le fer,
- de 20 à 95 % en poids d'un mélange de fibres de polytétrafluoroéthylène et de fibres minérales, les fibres minérales étant choisies parmi les fibres de titanates ou un mélange de fibres de titanate, de fibres de graphite ou de carbone, les fibres minérales représentant de 1 à 80 % en poids dudit mélange et la teneur en fibres de carbone ou de graphite ne dépassant pas 10 % en poids dudit mélange.

Selon une seconde variante, les nappes selon l'invention renferment essentiellement :
- de 3 à 35 % en poids de polymère fluoré, liant les fibres,
- de 5 à 25 % en poids d'un gel d'oxohydroxyde d'au moins un métal des groupes IVA, IVB, VB et VIB de la classification périodique ou des séries des lanthanides et des actinides, et le fer,
- de 20 à 95 % en poids d'un mélange de fibres de polytétrafluoroéthylène et de fibres minérales choisies parmi les fibres de graphite, de carbone ou leur mélange, les fibres minérales représentant de 1 à 10 % en poids dudit mélange.

Par polymère fluoré on entend un homopolymère ou un copolymère dérivé au moins en partie de monomères oléfiniques totalement substitués avec des atomes de fluor ou totalement substitués avec une combinaison d'atomes de fluor et de l'un au moins des atomes de chlore, brome ou iode par monomère.

Des exemples d'homo- ou copolymères fluorés peuvent être constitués par les polymères et copolymères dérivés de tétrafluoroéthylène, hexafluoropropylène, chlorotrifluoroéthylène, bromotrifluoroéthylène.

De tels polymères fluorés peuvent aussi contenir jusqu'à 75 moles pour cent de motifs dérivés d'autres monomères éthyléniquement insaturés contenant au moins autant d'atomes de fluor que d'atomes de carbone, comme par exemple le (di)fluorure de vinylidène, les esters de vinyle et de perfluoroalkyle, tel que le perfluoroalcoxyéthylène.

On peut naturellement utiliser dans l'invention plusieurs homo- ou copolymères fluorés tels que définis ci-avant. Il va sans dire qu'on ne sortirait pas du cadre de l'invention en associant à ces polymères fluorés une faible quantité, par exemple jusqu'à 10 ou 15 % en poids de polymères dont la molécule ne renferme pas d'atomes de fluor, comme par exemple du polypropylène.

Le polytétrafluoroéthylène est le liant préféré des diaphragmes selon l'invention.

Le polymère fluoré utilisé ici comme liant d'un ensemble de fibres peut être présent dans les diaphragmes en cause en des quantités variables dans de larges limites compte-tenu de la teneur en fibres et de la nature des divers constituants desdits diaphragmes.

Toutefois, pour assurer une bonne consolidation de l'ensemble, le liant représentera, de préférence de 5 à 40 % en poids dans le sous ensemble (fibres + liant).

Les diaphragmes selon l'invention renferment également de 20 à 95 % en poids d'un mélange de fibres de polytétrafluoroéthylène (PTFE) et de fibres minérales dont la proportion et la nature ont été précisées en tête du présent mémoire.

Les fibres de PTFE, utilisées dans le cadre de la présente invention peuvent présenter des dimensions variables ; leur diamètre (D) et généralement compris entre 10 et 500 µm et leur longueur (L) est telle que le rapport L/D soit compris entre 5 et 500. De préférence, on recourt à des fibres de PTFE dont les dimensions moyennes sont comprises entre 1 et 4 mm pour la longueur et entre 50 et 200 µm pour le diamètre. Leur préparation est décrite dans le brevet américain n° 4,444,640 et ce type de fibres de PTFE est connu des hommes de l'art. Comme cela apparaîtra plus clairement dans la suite du présent mémoire, il s'avère avantageux de faire subir aux dites fibres de PTFE un traitement préalable pour disperser les fibres et limiter la proportion d'aggrégats qu'elles sont susceptibles de présenter.

Les diaphragmes selon l'invention renferment également des fibres minérales choisies parmi les fibres de carbone, de graphite, de titanate et leurs mélanges, la proportion des fibres minérales représentant de 1 à 80 % en poids dans l'ensemble des fibres.

Les fibres de carbone ou de graphite se présentent sous forme de filaments dont le diamètre est généralement inférieur à 1 mm et, de préférence, compris entre 10⁻⁵ et 0,1 mm et, dont la longueur est supérieure à 0,5 mm et, de préférence comprise entre 1 et 20 mm.

De préférence, ces fibres de carbone ou de graphite présentent une distribution de longueurs monodispersée, c'est-à-dire une distribution de longueurs telles que la longueur d'au moins 80 % et, avantageusement d'au moins 90 %, des fibres correspond à la longueur moyenne des fibres à ± 20 % près et, de préférence à ± 10 % près. Lorsqu'elles sont présentes, ces fibres de carbone représentent avantageusement au maximum 10 % en poids de l'ensemble des fibres.

Les fibres de titanate sont des matériaux fibreux connus en eux-mêmes. Ainsi les fibres de titanate de potassium sont disponibles dans le commerce. D'autres fibres dérivant de l'octatitanate de potassium K₂Ti₈O₁₇ par remplacement partiel des ions titane au degré d'oxydation 4 par des cations métalliques au degré d'oxydation Il tels les cations magnésium et nickel, ou au degré d'oxydation III tels les cations fer ou chrome et par compensation de charge assurée par des ions alcalins tels les cations sodium et potassium, sont décrites dans la demande de brevet français n° 2 555 207.

D'autres fibres de titanates telles celles en tétratitanate de potassium (K₂Ti₄O₉) ou en dérivant, peuvent être utilisées.
Si les fibres de titanates peuvent, sans inconvénients majeurs, représenter jusqu'à 80 % en poids du mélange de fibres utilisé, lorsqu'on recourt à des fibres de carbone ou de graphite il est préférable que leur proportion dans le mélange de fibres n'excède pas 10 % en poids.

Bien entendu des mélanges de fibres minérales différentes par leur nature peuvent être utilisés.

Les diaphragmes selon l'invention peuvent renfermer également de 0 à 50 % en poids d'un gel d'oxohydroxyde d'au moins un métal des groupes IVA, IVB, VB et VIB de la classification périodique ou des séries des lanthanides et des actinides et le fer. De préférence, la teneur en gel représente de 2 à 25 % en poids et, pour une meilleure réalisation, au moins 3 % en poids.

Le gel en cause est réparti uniformément tant à la surface des diaphragmes selon l'invention que dans leur épaisseur.

La teneur en gel, initialement imbibé de chlorure de sodium, d'hydroxyde de sodium et d'eau, est déterminée après contact à 85°C avec une solution aqueuse à 140 g/l de soude et à 160 g/l de chlorure de sodium, suivi du refroidissement à 25°C, du lavage à l'eau et du séchage pendant 24 heures à 100°C.

Parmi les métaux des groupes et séries de la classification périodique énumérés ci-avant on peut citer à titre d'exemples : le titane, le zirconium, le thorium, le cérium, l'étain, le tantale, le niobium, l'uranium, le chrome, et le fer. Bien entendu des mélanges de tels métaux ou de tels métaux et des métaux alcalins tels le sodium ou le potassium peuvent être présents dans les diaphragmes selon l'invention.

Une première classe de diaphragmes particulièrement avantageux renfermera comme fibres minérales des fibres de titanate, en particulier de titanate de potassium, dont la teneur dans le mélange de fibres atteint au moins 5 % en poids et une proportion en gel d'oxohydroxyde métallique au sens indiquée ci-avant, de préférence comprise entre 2 et 10 % en poids.

Une seconde classe de diaphragmes particulièrement avantageux renfermera comme fibres minérales des fibres de carbone ou de graphite de longueurs monodispersées dont la teneur dans le mélange de fibres est comprise entre 1 et 10 % en poids, et de préférence de 5 à 25 % en poids de gel d'oxohydroxyde métallique au sens indiqué ci-avant.

De préférence, les diaphragmes selon l'invention renferment un gel d'oxohydroxyde d'au moins un métal des groupes IVA et IVB.

De préférence, ils renferment un gel d'oxohydroxyde de titane ou de zirconium.

Les diaphragmes selon la présente invention ont été définis par leurs constituants essentiels. Il va de soi que ces matériaux peuvent renfermer divers autres additifs en quantité mineure n'excédant généralement pas 5 % en poids qui auront été ajoutés soit simultanément soit successivement au cours de l'une ou l'autre des phases de leur élaboration. Ainsi ils pourront renfermer des traces d'agents tensioactifs ou surfactifs, d'agents porogènes dont le rôle est de régler la porosité du diaphragme, et/ou d'épaississants, bien qu'en principe de tels agents soient décomposés ou éliminés lors de l'élaboration dudit diaphragme.

Les diaphragmes selon la présente invention présentent avantageusement un poids par unité de surface compris entre 0,4 et 3 kg/m² et, de préférence entre 0,9 et 1,9 kg/m².

La présente invention a également pour objet l'association d'un élément cathodique composite et d'un diaphragme, décrit ci-avant.

Les éléments cathodiques (ou précathodiques) composites en cause résultent de l'association d'une cathode élémentaire constituée par une surface métallique fortement poreuse et d'une nappe fibreuse microporeuse renfermant une proportion notable de fibres conductrices de l'électricité, les fibres étant microconsolidées par un polymère fluoré.

Les éléments cathodiques (ou précathodiques) préférés dans le cadre de la présente invention renferment comme fibres conductrices de l'électricité des fibres de carbone ou de graphite. De préférence, ces fibres présentent une répartition des longueurs monodispersée.

Bien que le polymère fluoré, liant de la nappe précathodique puisse être choisi parmi les polymères fluorés définis en tête du présent mémoire, on recourt de préférence, au polytétrafluoroéthylène.

Ces éléments cathodiques (ou précathodiques) composites sont décrits dans les demandes de brevet européen précedemment incorporées par référence.

Il va de soi, que l'association en cause est en quelque sorte un assemblage, d'une face vers l'autre de trois couches, à savoir la cathode élémentaire, une première nappe fibreuse renfermant les fibres conductrices de l'électricité, cette nappe présentant des propriétés intrinsèques décrites dans lesdites demandes de brevet européen, et le diaphragme, ledit assemblage constituant un ensemble cohérent.

Comme indiqué en tête du présent mémoire la présente invention a également pour objet un procédé de préparation des diaphragmes qui viennent d'être décrits.

Le procédé de préparation des diaphragmes en cause comprend essentiellement la succession d'étapes suivantes :
a) la préparation en milieu essentiellement aqueux d'une dispersion comprenant les fibres, le liant à base de polymère fluoré sous forme de particules, le cas échéant au moins un précurseur d'oxohydroxyde d'au moins l'un des métaux des groupes IVA, IVB, VB et VIB de la classification périodique ou des séries des lanthanides et des actinides, sous forme de particules et, le cas échéant des additifs,
b) le dépôt d'une nappe par filtration sous vide programmé de ladite dispersion à travers un matériau poreux,
c) l'élimination du milieu liquide et, le cas échéant, le séchage de la nappe ainsi formée,
d) le frittage de la nappe et,
e) le traitement, le cas échéant, in-situ dans les conditions de l'électrolyse, par une solution aqueuse d'hydroxyde alcalin.

Par milieu essentiellement aqueux on entend un milieu ne renfermant pas d'autres composés organiques que les constituants précédemment énumérés et les additifs tels les tensioactifs, surfactifs et épaississants. Ainsi le milieu en cause ne renferme pas de solvant organique.

En effet, si la présence de solvants organiques n'est pas nuisible en elle-même, un avantage présenté tant par le présent procédé que par les diaphragmes selon l'invention réside dans le fait que la présence de solvants organiques n'est pas nécessaire à l'élaboration desdits diaphragmes et que, de ce fait, il n'est pas nécessaire de prévoir une étape supplémentaire d'évaporation dudit solvant. Cet avantage est tout à fait surprenant quand on connaît le caractère hydrophobe des fibres et poudres de polymères fluorés et, en particulier de PTFE.

Par précurseurs d'oxohydroxyde de l'un des métaux des groupes IVA, IVB, VB et VIB de la classification périodique ou des séries des lanthanides et des actinides, et le fer, on entend des sels desdits métaux, aussi peu solubles que possible dans l'eau dont l'anion est choisi dans le groupe comprenant les anions phosphate, pyrophosphate, hydrogénophosphate ou polyphosphate, substitué le cas échéant par un métal alcalin, et silicate.

A titre d'exemples de sels utilisables dans le cadre du présent procédé on peut citer :
- le phosphate de titane (α-TiP)
- le phosphate de zirconium (α-ZrP)
- le phosphate de cérium
- Ti(NaPO₄)₂
- TiNaH(PO₄)₂
- TiP₂O₇
- TaH (PO₄)₂
- NbOPO₄
- UO₂HPO₄
- Cr₅(P₃O₁₀)₃
- Fe₄(P₂O₇)₃
- les composés répondant à la formule

   M₁₊ₓ Zr₂ Siₓ P₃₋ₓ O₁₂

   dans laquelle :
   . M représente un atome de sodium ou de lithium
   . x est un nombre pouvant être nul et inférieur à 3

Ces précurseurs sont introduits sous forme de particules. Ils peuvent être introduits sous forme d'une poudre de granulométrie généralement inférieure à 500 µm ou sous forme de fibres dont les dimensions sont généralement comprises entre 0,1 et 50 µm pour le diamètre et entre 3 µm et 3 mm pour la longueur.

Le liant à base de polymère fluoré se présente généralement sous forme de poudre sèche ou de dispersion aqueuse (latex) dont l'extrait sec représente de 30 à 80 % en poids.

Comme cela est bien connu de l'homme de l'art la dispersion ou suspension en cause est en général fortement diluée, la teneur en matières sèches (fibres, liant, précurseurs et additifs) représentant de l'ordre de 1 à 15 % du poids de l'ensemble pour en faciliter la manipulation à l'échelle industrielle.

Divers additifs peuvent également être introduits dans la dispersion en particulier des agents tensio-actifs ou surfactifs tel l'octoxynol (Triton X-100®), des agents porogènes tel la silice, des agents épaississants tels des polysaccharides naturels ou synthétiques.

Bien entendu la dispersion renfermera tous les constituants essentiels du diaphragme à l'exception du gel d'oxohydroxyde dont il a été question précédemment, mais le cas échéant des précurseurs du gel au sens indiqué ci-avant seront présents.

Les quantités relatives des constituants essentiels du diaphragme à introduire dans la dispersion sont aisément déterminables par l'homme de l'art compte-tenu du fait qu'elles sont sensiblement les mêmes que celles retrouvées dans le diaphragme lui-même, aux exceptions près du porogène qui est en principe éliminé par action, par exemple, de la soude électrolytique et du précurseur du gel d'oxohydroxyde. En effet le précurseur est transformé totalement en gel d'oxohydroxyde dont la partie "active", obtenue après lavage et séchage du gel, représente de 10 à 90 % en poids du précurseur introduit.

L'homme de l'art sera également à même de déterminer au moyen d'essais simples la quantité de matières sèches à disperser dans le milieu aqueux en fonction du taux d'arrêt observable sur le matériau poreux au travers duquel la dispersion est filtrée dans les conditions de vide programmé.

En général, l'extrait sec en suspension renferme comme constituants principaux :
- de 30 à 80 % en poids de fibres (mélange de fibres de PTFE et de fibres minérales)
- de 0 à 50 % en poids d'au moins un précurseur de gel d'oxohydroxyde
- de 3 à 35 % en poids de poudre de PTFE (liant) et,
- de 5 à 40 % en poids de silice.

Pour une bonne mise en oeuvre de la présente invention la teneur en poudre de PTFE représente de 5 à 40 % en poids de l'ensemble (poudre de PTFE + fibres). Pour une bonne mise en oeuvre de la présente invention la teneur en poids d'au moins un précurseur de gel d'oxohydroxyde dans ledit extrait sec sera comprise entre 3 et 40 %.

La nappe est alors formée par filtration sous vide programmé, de la dispersion à travers un matériau poreux telles des toiles ou des grilles dont le vide de maille, les perforations ou la porosité peut-être compris entre 1 µm et 2 mm.

Le programme de vide peut être continu ou par paliers, de la pression atmosphérique à la pression finale (0,01 à 0,5 bar absolu).

Après élimination du milieu liquide et, le cas échéant le séchage de la nappe ainsi formée, l'ensemble est fritté.

Le frittage est réalisé de manière en elle-même connue à une température supérieure au point de fusion ou de ramollissement du polymère fluoré, liant de ladite nappe. Cette étape qui permet la consolidation de la nappe, est alors suivie d'une étape de traitement par lequel la nappe est mise en contact avec une solution aqueuse d'hydroxyde alcalin, et plus particulièrement avec une solution de soude électrolytique.

Cette mise en contact peut être réalisée in-situ c'est-à-dire lors de la mise en place de la nappe consolidée dans la cellule d'électrolyse, au contact de la solution de soude électrolytique.

Le traitement est avantageusement réalisé au contact d'une solution aqueuse d'hydroxyde de sodium dont la concentration est comprise entre 40 et 200 g/l et à une température comprise entre 20 et 95°C.

Les précurseurs du gel d'oxohydroxyde, définis précédemment sont susceptibles de subir diverses transformations au cours des diverses opérations d'élaboration du diaphragme, et notamment une transformation non destructive lors de l'opération de frittage, c'est-à-dire conduisant uniquement à des pertes de molécules d'eau d'hydratation ou de constitution ; ils seront transformés par l'étape de traitement précitée en un gel frais d'oxohydroxyde du métal concerné, imprégné d'électrolyte et d'eau.

Les propriétés d'un tel diaphragme sont notablement améliorées.

Par ailleurs, un avantage du présent procédé réside dans le fait qu'il ne nécessite pas d'étape supplémentaire d'imprégnation d'une matrice fibreuse. En outre, le recours à des précurseurs sous forme de poudre facilite grandement la mise en oeuvre.

Selon une variante avantageuse de mise en oeuvre du présent procédé l'étape de préparation de la suspension ou dispersion est précédée par une étape de préparation des fibres de PTFE par agitation mécanique de celles-ci dans un milieu essentiellement aqueux.

Selon une autre variante avantageuse du présent procédé la filtration de la dispersion ou suspension est réalisée à travers un élément cathodique (ou précathodique) au sens indiqué dans le présent mémoire.

Par la mise en oeuvre d'une telle variante il est possible de réaliser une association diaphragme - élément précathodique.

Une telle association, présente des propriétés remarquables de cohérence, couplant les avantages procurés par l'élément précathodique et les diaphragmes selon l'invention.

L'invention a également pour objet un procédé de préparation de telles associations comprenant essentiellement la succession d'étapes suivantes :
a) le dépôt d'une nappe précathodique par filtration sous vide programmé d'une dispersion en milieu essentiellement aqueux de fibres, de liant sous forme de particules et, le cas échéant d'additifs, à travers une cathode élémentaire constituée d'une surface métallique présentant un vide de maille ou des perforations compris entre 20 µm et 5 mm,
b) l'élimitation du milieu liquide et, le cas échéant, le séchage de la nappe ainsi formée,
c) la filtration sous vide programmé, à travers la nappe précathodique, d'une dispersion en milieu essentiellement aqueux de fibres de polytétrafluoréthylène, de fibres minérales choisies parmi les fibres de carbone, de graphite, de titanate et leurs mélanges, de liant à base d'un polymère fluoré sous forme de particules, le cas échéant au moins un précurseur d'oxohydroxyde de l'un au moins des métaux des groupes IVA, IVB, VB et VIB de la classification périodique ou des séries des lanthanides et des actinides, sous forme de particules, et, le cas échéant des additifs,
d) l'élimination du milieu liquide et, le cas échéant, le séchage de la nappe ainsi formée,
e) le frittage de l'ensemble et,
f) le traitement, le cas échéant in-situ dans les conditions de l'électrolyse, par une solution aqueuse d'hydroxyde alcalin.

Un tel procédé présente l'avantage de contribuer à l'élaboration d'associations de forte cohésion. Un autre avantage réside dans sa grande simplicité de mise en oeuvre du fait qu'une seule étape de frittage est suffisante pour élaborer des associations de forte cohésion et du fait qu'une seule étape permet d'éliminer les porogènes, tant de la nappe précathodique que du diaphragme, et de donner naissance au gel frais d'oxohydroxyde du métal en cause.

Selon une variante avantageuse dudit procédé on utilise comme liant de la nappe précathodique et du diaphragme, du PTFE.

Les exemples ci-après illustrent la présente invention.

### EXEMPLES :

On prépare une suspension sous agitation de :
A - eau adoucie, dont la quantité est calculée pour obtenir environ 4 litres de suspension
B - 100 g de fibres de polytétrafluoroéthylène introduites sous forme de 200 g d'un mélange de chlorure de sodium et de fibres de PTFE (50/50 en poids) traitée au préalable, comme décrit ci-après.
C - 25 g de PTFE sous forme de latex à environ 65 % en poids d'extrait sec.
D - 1,2 g d'octoxynol sous forme d'une solution dans l'eau à 40 g/l.
E - 30 g de silice précipitée sous forme de particules de granulométrie moyenne de 3 µm et dont la surface B.E.T. est de 250 m²/g.
F - des fibres de graphite dont le diamètre est d'environ 10 µm et dont la longueur moyenne est de 1,5 mm en quantité indiquée dans le tableau (I) ci-après.
G - des fibres de titanate de potassium de diamètre 0,2 ~ 0,5 µm et de longueur 10 ~ 20 µm en quantité indiquée dans le tableau (I) ci-après.
H - de la poudre de phosphate de titane (α-TiP) de diamètre moyen 0,5 µm ou de phosphate de zirconium de diamètre moyen 1 µm en quantité indiquée dans le tableau (I) ci-après.
I - 1,5 g de gomme xanthane.

Les fibres de PTFE imprégnées de chlorure de sodium sont préalablement traitées par mixage d'une solution d'un litre d'eau comprenant environ 100 g d'un mélange renfermant environ 50 % (pds) de fibres de PTFE et 50 % (pds) de chlorure de sodium.

Cette opération est éventuellement répétée de manière à obtenir la quantité voulue de fibres PTFE.

La ou les solutions sont ensuite versées dans un récipient contenant le complément d'eau nécessaire à la préparation de la suspension.

En effet le volume total d'eau est calculé de manière à ce que le pourcentage pondéral de matière sèche (B + C + E + F + G + H)/A soit d'environ 4,5 %.

On ajoute ensuite suscessivement les divers ingrédients du mélange précité sous agitation.

On agite durant 30 mn

On abandonne la solution pendant 48 heures

On prélève le volume de solution requis de manière à ce qu'il contienne la quantité d'extrait sec que l'on compte déposer pour former le diaphragme (de l'ordre de 1,4 kg/m2).

La suspension est réagitée pendant 30 mn avant utilisation.

La filtration est conduite sous vide programmé sur cathode volumique (préparée au préalable selon l'exemple 7 de la demande de brevet européen n° 296 076) comme suit :
. 1 mn à un vide de -5 à -10 mbar de pression relative par rapport à la pression atmosphérique
. montée du vide à raison de 50 mbar/mn
. essorage de 15 mn au vide maximum (environ -800 mbar de pression relative par rapport à la pression atmosphérique)

Le composite est alors fritté après séchage éventuel à 100°C et/ou stabilisation intermédiaire de la température, en portant l'ensemble cathodique et le diaphragme à 350°C pendant 7 mn.

Les matériaux des exemples 1 et 2 ont été préparés avec la variante suivante de procédé :
- on mélange les ingrédients A, B et C, sous agitation pendant 30 mn
- on ajoute les autres ingrédients et on agite l'ensemble pendant 30 mn
- on traite l'ensemble par mixage, éventuellement répété, de solutions d'un litre avant de laisser la suspension au repos pendant 48 heures.

On a alors évalué les performances des divers matériaux composites, dont la fabrication vient d'être décrite, dans une cellule d'électrolyse qui présente les caractéristiques suivantes et dont les conditions de fonctionnement sont indiquées ci-après :
. Anode en titane déployé, laminé, revêtu de TiO₂-RuO₂
. élément cathodique en acier doux tressé et laminé ; fils de 2 mm, maille de 2 mm recouvert de la nappe précathodique et du diaphragme.
. Distance anode-élément cathodique : 6 mm
. Surface active de l'électrolyseur : 0,5 dm²
. Cellule assemblée selon le type filtre-presse
. Densité de courant : 25 A dm⁻² (sauf spécification contraire)
. Température : 85°C
. Fonctionnement à chlorure anodique constant : 4,8 mole.1⁻¹
. Titre de la soude électrolytique : 120 ou 200 g/l

Les conditions particulières et les résultats obtenus sont rassemblés dans le tableau (I) ci-après :
. RF : rendement Faraday
. ΔU : tension aux bornes de l'électrolyseur sous la densité de courant spécifiée.
. performance (kwh/TCl₂) = consommation énergétique du système en kilowattheure par tonne de chlore produit. 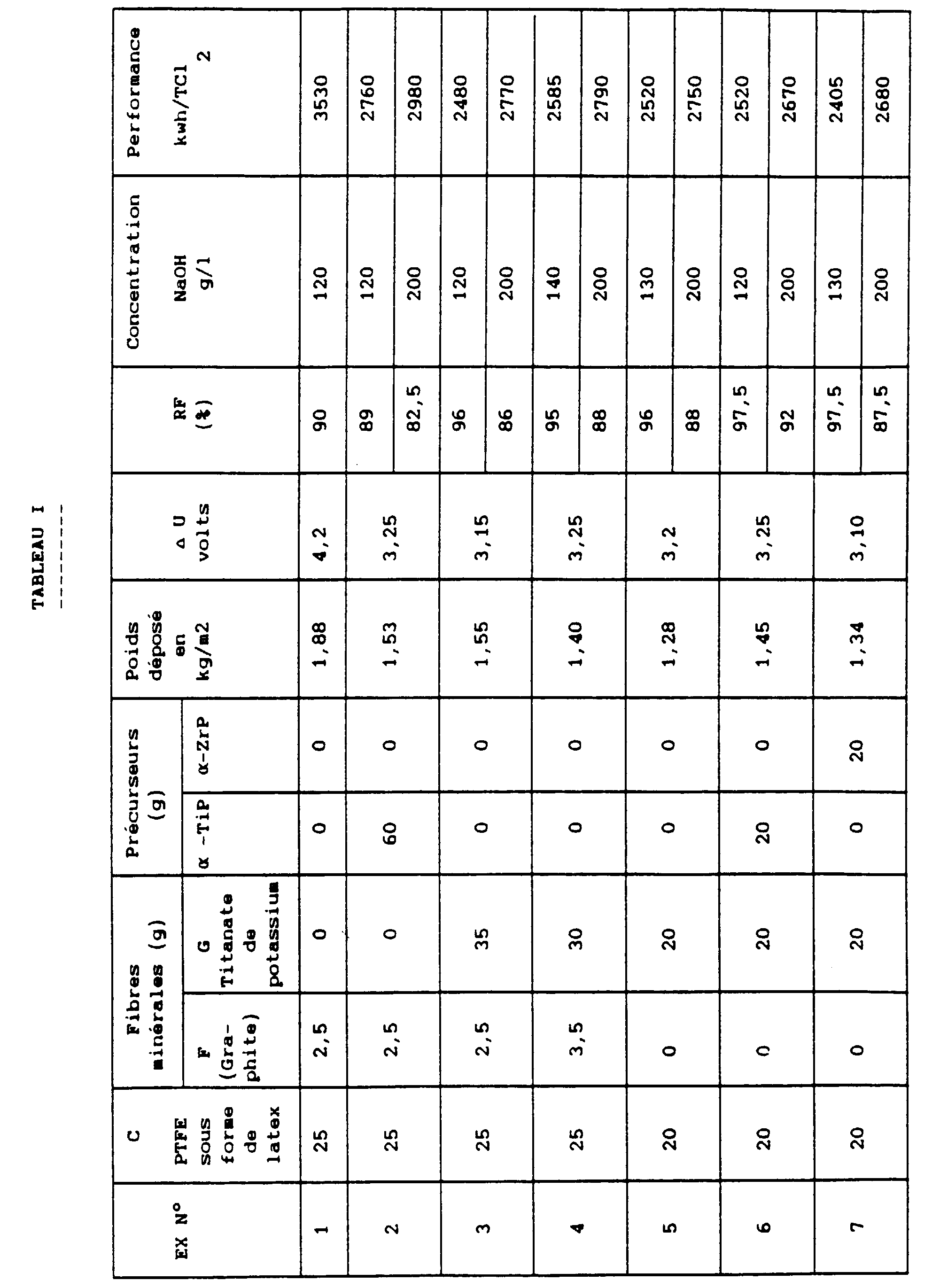 Les matériaux des exemples 5 et 6 ont été testés sous des densités de courant comprises entre 30 et 40 A/dm². Les résultats sont consignés dans le tableau II ci-après :

**TABLEAU II**

| Ex N° | densité A/dm2 | ΔU volts | RF (%) | Concentration NaOH | Performance kwh/TCl₂ |
|---|---|---|---|---|---|
| 5 | 30 | 3,40 | 88 | 200 | 2920 |
| | 35 | 3,60 | 88,5 | | 3075 |
| | 40 | 3,75 | 88 | | 3265 |
| 6 | 30 | 3,53 | 91,5 | 200 | 2915 |
| | 35 | 3,75 | 91,5 | | 3098 |
| | 40 | 3,95 | 91,5 | | 3265 |

## Revendications

1. Diaphragme microporeux susceptible d'être formé in situ par voie humide comprenant une nappe fibreuse, exempte d'amiante, dont les fibres sont microconsolidées par un polymère fluoré, l'ensemble étant fritté, ladite nappe renfermant essentiellement :
- de 3 à 35 % en poids de polymère fluoré, liant les fibres,
- de 0 à 50 % en poids d'un gel d'oxohydroxyde d'au moins un métal des groupes IVA, IVB, VB et VIB de la classification périodique ou des séries des lanthanides et des actinides, et le fer,
- de 20 à 95 % en poids d'un mélange de fibres de polytétrafluoroéthylène et de fibres minérales, les fibres minérales étant choisies parmi les fibres de titanates ou un mélange de fibres de titanate, de fibres de graphite ou de carbone, les fibres minérales représentant de 1 à 80 % en poids dudit mélange et la teneur en fibres de carbone ou de graphite ne dépassant pas 10 % en poids dudit mélange.

2. Diaphragme microporeux susceptible d'être formé in situ par voie humide comprenant une nappe fibreuse, exempte d'amiante, dont les fibres sont microconsolidées par un polymère fluoré, l'ensemble étant fritté, ladite nappe renfermant essentiellement :
- de 3 à 35 % en poids de polymère fluoré, liant les fibres,
- de 5 à 25 % en poids d'un gel d'oxohydroxyde d'au moins un métal des groupes IVA, IVB, VB et VIB de la classification périodique ou des séries des lanthanides et des actinides, et le fer,
- de 20 à 95 % en poids d'un mélange de fibres de polytétrafluoroéthylène et de fibres minérales choisies parmi les fibres de graphite, de carbone ou leur mélange, les fibres minérales représentant de 1 à 10 % en poids dudit mélange.

3. Diaphragme selon la revendication 1, caractérisé en ce que les fibres minérales sont des fibres de titanate dont la teneur dans le mélange de fibres atteint au moins 5 % en poids.

4. Diaphragme selon la revendication 3, caractérisé en ce qu'il contient un gel d'oxohydroxyde dont la teneur est comprise entre 2 et 10 % en poids.

5. Diaphragme selon l'une quelconque des revendications précédentes, caractérisé en ce qu'il renferme un gel d'oxohydroxyde d'au moins un métal des groupes IVA et IVB.

6. Diaphragme selon la revendication précédente, caractérisé en ce qu'il renferme un gel d'oxohydroxyde de titane ou de zirconium.

7. Diaphragme selon l'une quelconque des revendications précédentes, caractérisé en ce que le polymère fluoré, liant les fibres, est le polytétrafluoroéthylène.

8. Diaphragme selon l'une quelconque des revendications précédentes, caractérisé en ce que le polymère fluoré liant les fibres représente de 5 à 40 % en poids dans le sous ensemble (fibres + polymère fluoré).

9. Association d'un élément cathodique composite et d'un diaphragme selon l'une quelconque des revendications précédentes.

10. Association selon la revendication précédente, caractérisé en ce que l'élément cathodique composite résulte de l'association d'une cathode élémentaire constituée par une surface métallique fortement poreuse et d'une nappe fibreuse microporeuse renfermant une proportion notable de fibres conductrices de l'électricité, les fibres étant microconsolidées par un polymère fluoré.

11. Association selon la revendication précédente, caractérisé en ce que l'élément cathodique composite renferme comme fibres conductrices de l'électricité des fibres de carbone ou de graphite dont la répartition de longueurs est monodispersée.

12. Association selon l'une des revendications 10 ou 11, caractérisé en ce que le polymère fluoré liant les fibres, tant du diaphragme que de la nappe fibreuse microporeuse de l'élément cathodique, est le polytétrafluoroéthylène.

13. Procédé de préparation d'un diaphragme selon l'une quelconque des revendications 1 à 8, caractérisé en ce qu'il comprend essentiellement la succession des étapes suivantes :
a) la préparation en milieu essentiellement aqueux d'une dispersion comprenant les fibres, le liant à base de polymère fluoré sous forme de particules, le cas échéant au moins un précurseur d'un gel d'oxohydroxyde de l'un des métaux des groupes IVA, IVB, VB et VIB de la classification périodique ou des séries des lanthanides et des actinides, et le fer, sous forme de particules et, le cas échéant, des additifs,
b) le dépôt d'une nappe par filtration sous vide programmé de ladite dispersion à travers un matériau poreux,
c) l'élimination du milieu liquide et, le cas échéant, le séchage de la nappe ainsi formée,
d) le frittage de la nappe et,
e) le traitement, le cas échéant, in situ dans les conditions de l'électrolyse, par une solution aqueuse d'hydroxyde de métal alcalin.

14. Procédé de préparation d'une association selon l'une quelconque des revendications 9 à 12, caractérisé en ce qu'il comprend essentiellement la succession des étapes suivantes :
a) le dépôt d'une nappe par filtration sous vide programmé d'une dispersion en milieu essentiellement aqueux de fibres, de liant sous forme de particules et, le cas échéant d'additifs, à travers une cathode élémentaire constituée d'une surface métallique présentant un vide de maille ou des perforations compris entre 20 µm et 5 mm,
b) l'élimination du milieu liquide et, le cas échéant, le séchage de la nappe ainsi formée,
c) la filtration sous vide programmé, à travers la nappe obtenue précédemment, d'une dispersion en milieu essentiellement aqueux de fibres de polytétrafluoroéthylène, de fibres minérales choisies parmi les fibres de carbone, de graphite, de titanate ou leur mélanges, de liant à base d'un polymère fluoré sous forme de particules, le cas échéant au moins un précurseur d'un gel d'oxohydroxyde d'au moins l'un des métaux des groupes IVA, IVB, VB et VIB de la classification ou des séries des lanthanides ou des actinides, et le fer, sous forme de particules et, le cas échéant des additifs,
d) l'élimination du milieu liquide et, le cas échéant, le séchage de la nappe ainsi formée,
e) le frittage de l'ensemble et,
f) le traitement, le cas échéant, in situ dans les conditions de l'électrolyse, par une solution aqueuse d'hydroxyde de métal alcalin.

15. Procédé selon l'une quelconque des revendications 13 ou 14, caractérisé en ce que le précurseur d'un gel d'oxohydroxyde est choisi parmi les sels des métaux des groupes IVA, IVB, VB et VIB de la classification périodique ou des séries de lanthanides ou des actinides, et le fer, aussi peu solubles que possible dans l'eau dont l'anion est choisi parmi les anions phosphate, pyrophosphate, hydrogénophosphate ou polyphosphate, substitué le cas échéant par un métal alcalin, et silicate.

16. Procédé selon la revendication précédente, caractérisé en ce que le précurseur est l'α- TiP ou l'α-ZrP.

## Patentansprüche

1. Mikroporöses Diaphragma, das in situ auf feuchtem Wege gebildet werden kann, bestehend aus einem asbestfreien, faserförmigen Vlies, dessen Fasern durch ein fluoriertes Polymer mikroverfestigt sind, wobei das Ganze gesintert ist und das Vlies im wesentlichen umfaßt:
- 3 bis 35 Gew.-% fluoriertes Polymer, das die Fasern verbindet,
- 0 bis 50 Gew.-% eines Oxohydroxid-Gels von mindestens einem Metall der Gruppen IVA, IVB, VB und VIB des Periodensystems der Elemente oder der Reihen der Lanthanide und der Actinide und Eisen,
- 20 bis 95 Gew.-% einer Mischung von Fasern aus Polytetrafluorethylen und von mineralischen Fasern, wobei die mineralischen Fasern unter den Titanatfasern oder einer Mischung von Titanatfasern, Graphitfasern oder Carbonfasern ausgewählt werden, und die mineralischen Fasern 1 bis 80 Gew.-% der genannten Mischung darstellen sowie der Gehalt an Carbonfasern oder Graphitfasern 10 Gew.-% der genannten Mischung nicht übersteigt.

2. Mikroporöses Diaphragma, das in situ auf feuchtem Wege gebildet werden kann, bestehend aus einem asbestfreien, faserförmigen Vlies, dessen Fasern durch ein fluoriertes Polymer mikroverfestigt sind, wobei das Ganze gesintert ist und das Vlies im wesentlichen umfaßt:
- 3 bis 35 Gew.-% fluoriertes Polymer, das die Fasern verbindet,
- 5 bis 25 Gew.-% eines Oxohydroxid-Gels von mindestens einem Metall der Gruppen IVA, IVB, VB und VIB des Periodensystems der Elemente oder der Reihen der Lanthanide und der Actinide und Eisen,
- 20 bis 95 Gew.-% einer Mischung von Fasern aus Polytetrafluorethylen und von mineralischen Fasern, wobei die mineralischen Fasern ausgewählt werden unter den Graphitfasern, den Carbonfasern oder ihren Mischungen und diese mineralischen Fasern 1 bis 10 Gew.-% der genannten Mischung darstellen.

3. Diaphragma nach Anspruch 1, dadurch gekennzeichnet, daß die mineralischen Fasern Titanatfasern sind, deren Gehalt in der Fasermischung mindestens 5 Gew.-% erreicht.

4. Diaphragma nach Anspruch 3, dadurch gekennzeichnet, daß es ein Oxohydroxid-Gel umfaßt, dessen Gehalt zwischen 2 und 10 Gew.-% liegt.

5. Diaphragma nach irgendeinem der vorstehenden Ansprüche, dadurch gekennzeichnet, daß es ein Oxohydroxid-Gel von mindestens einem Metall der Gruppen IVA und IVB umfaßt.

6. Diaphragma nach Anspruch 5, dadurch gekennzeichnet, daß es ein Oxohydroxid-Gel von Titan oder Zirkonium umfaßt.

7. Diaphragma nach irgendeinem der vorstehenden Ansprüche, dadurch gekennzeichnet, daß das die Fasern verbindende fluorierte Polymer Polytetrafluorethylen ist.

8. Diaphragma nach irgendeinem der vorstehenden Ansprüche, dadurch gekennzeichnet, daß das die Fasern verbindende fluorierte Polymer 5 bis 40 Gew.-% in der Untergruppe (Fasern + fluoriertes Polymer) darstellt.

9. Assoziation eines kathodischen Verbundelementes und eines Diaphragmas nach irgendeinem der vorstehenden Ansprüche.

10. Assoziation nach Anspruch 9, dadurch gekennzeichnet, daß das kathodische Verbundelement aus der Assoziierung eines Kathodenelementes, gebildet durch eine stark poröse metallische Oberfläche, und eines mikroporösen Faservlieses resultiert, das einen beträchtlichen Anteil an elektrisch leitenden Fasern umfaßt, die durch ein fluoriertes Polymer mikroverfestigt sind.

11. Assoziation nach Anspruch 10, dadurch gekennzeichnet, daß das kathodische Verbundelement als elektrisch leitende Fasern Carbonfasern oder Graphitfasern umfaßt, deren Längenverteilung monodispers ist.

12. Assoziation nach einem der Ansprüche 10 oder 11, dadurch gekennzeichnet, daß das die Fasern verbindende fluorierte Polymer, sowohl beim Diaphragma als auch beim mikroporösen Faservlies des Kathodenelementes, Polytetrafluorethylen ist.

13. Verfahren zur Herstellung eines Diaphragmas nach irgendeinem der Ansprüche 1 bis 8, dadurch gekennzeichnet, daß es im wesentlichen die Aufeinanderfolge der nachstehenden Stufen umfaßt:
a) Herstellung, im wesentlichen im wäßrigen Medium, einer Dispersion, die die Fasern, das Bindemittel in Form von Teilchen auf der Basis von fluoriertem Polymer, gegebenenfalls mindestens einen Vorläufer eines Oxohydroxid-Gels von einem der Metalle der Gruppen IVA, IVB, VB und VIB des Periodensystems der Elemente oder der Reihen der Lanthanide und der Actinide und Eisen, in Form von Teilchen, und gegebenenfalls Zusatzstoffe umfaßt,
b) Ablagerung eines Vlieses durch Filtration der genannten Dispersion unter programmiertem Vakuum durch ein poröses Material hindurch,
c) Entfernung des flüssigen Mediums und gegebenenfalls Trocknung des auf diese Weise gebildeten Vlieses,
d) Sintern des Vlieses, und
e) gegebenenfalls Behandlung in situ unter Elektrolysebedingungen mit einer wäßrigen Alkalimetallhydroxid-Lösung.

14. Verfahren zur Herstellung einer Assoziation nach irgendeinem der Ansprüche 9 bis 12, dadurch gekennzeichnet, daß es im wesentlichen die Aufeinanderfolge der nachstehenden Stufen umfaßt:
a) Ablagerung eines Vlieses durch Filtration einer im wesentlichen wäßrigen Dispersion von Fasern, Bindemittel in Form von Teilchen und gegebenenfalls Zusatzstoffen, unter programmiertem Vakuum durch ein Kathodenelement hindurch, das aus einer metallischen Oberfläche mit einer Maschenweite oder Perforationen zwischen 20 µm und 5 mm besteht,
b) Entfernung des flüssigen Mediums und gegebenenfalls Trocknung des auf diese Weise gebildeten Vlieses,
c) Filtration einer im wesentlichen wäßrigen Dispersion von Fasern aus Polytetrafluorethylen, von mineralischen Fasern, ausgewählt unter Carbonfasern, Graphitfasern, Titanatfasern oder ihren Mischungen, von Bindemittel in Form von Teilchen auf der Basis eines fluorierten Polymers, gegebenenfalls von mindestens einem Vorläufer eines Oxohydroxid-Gels von mindestens einem der Metalle der Gruppen IVA, IVB, VB und VIB des Periodensystems der Elemente oder der Reihen der Lanthanide oder der Actinide und Eisen in Form von Teilchen, und gegebenenfalls von Zusatzstoffen, unter programmiertem Vakuum durch das vorstehend erhaltene Vlies hindurch,
d) Entfernung des flüssigen Mediums und gegebenenfalls Trocknung des auf diese Weise gebildeten Vlieses,
e) Sintern des Ganzen, und
f) gegebenenfalls Behandlung in situ unter Elektrolysebedingungen mit einer wäßrigen Alkalimetallhydroxid-Lösung.

15. Verfahren nach irgendeinem der Ansprüche 13 oder 14, dadurch gekennzeichnet, daß der Vorläufer eines Oxohydroxid-Gels unter den Salzen der Metalle der Gruppen IVA, IVB, VB und VIB des Periodensystems der Elemente oder der Reihen der Lanthanide oder der Actinide und Eisen ausgewählt wird, die so wenig als möglich in Wasser löslich sind und deren Anion unter den Anionen Phosphat, Pyrophosphat, Hydrogenphosphat oder Polyphosphat, gegebenenfalls substituiert durch ein Alkalimetall, und Silikat ausgewählt wird.

16. Verfahren nach Anspruch 15, dadurch gekennzeichnet, daß der Vorläufer α-TiP oder α-ZrP ist.

## Claims

1. Microporous diaphragm capable of being formed in situ by a wet route, including an asbestos-free fibrous sheet in which the fibres are microconsolidated with a fluoropolymer, the whole being sintered, the said sheet containing essentially:
- from 3 to 35 % by weight of fluoropolymer binding the fibres,
- from 0 to 50 % by weight of a gel of oxohydroxide of at least one metal of groups IVA, IVB, VB and VIB of the Periodic Classification or of the lanthanide and actinide series and iron,
- from 20 to 95 % by weight of a mixture of polytetrafluoroethylene fibres and of inorganic fibres, the inorganic fibres being chosen from titanate fibres or a mixture of titanate fibres and graphite or carbon fibres, the inorganic fibres representing from 1 to 80 % by weight of the said mixture and the content of carbon or graphite fibres not exceeding 10 % by weight of the said mixture.

2. Microporous diaphragm capable of being formed in situ by a wet route, including an asbestos-free fibrous sheet in which the fibres are microconsolidated with a fluoropolymer, the whole being sintered, the said sheet containing essentially:
- from 3 to 35 % by weight of fluoropolymer binding the fibres,
- from 5 to 25 % by weight of a gel of oxohydroxide of at least one metal of groups IVA, IVB, VB and VIB of the Periodic Classification or of the lanthanide and actinide series, and iron,
- from 20 to 95 % by weight of a mixture of polytetrafluoroethylene fibres and of inorganic fibres chosen from graphite and carbon fibres or their mixture, the inorganic fibres representing from 1 to 10 % by weight of the said mixture.

3. Diaphragm according to Claim 1, characterized in that the inorganic fibres are titanate fibres whose content in the mixture of fibres reaches at least 5 % by weight.

4. Diaphragm according to Claim 3, characterized in that it contains an oxohydroxide gel whose content is between 2 and 10 % by weight.

5. Diaphragm according to any one of the preceding claims, characterized in that it contains a gel of oxohydroxide of at least one metal of groups IVA and IVB.

6. Diaphragm according to the preceding claim, characterized in that it contains a titanium or zirconium oxohydroxide gel.

7. Diaphragm according to any one of the preceding claims, characterized in that the fluoropolymer binding the fibres is polytetrafluoroethylene.

8. Diaphragm according to any one of the preceding claims, characterized in that the fluoropolymer binding the fibres represents from 5 to 40 % by weight in the subassembly (fibres + fluoropolymer).

9. Association of a composite cathode element and of a diaphragm according to any one of the preceding claims.

10. Association according to the preceding claim, characterized in that the composite cathode element results from the association of an elementary cathode consisting of a highly porous metal surface and of a microporous fibrous sheet containing an appreciable proportion of electrically conductive fibres, the fibres being microconsolidated with a fluoropolymer.

11. Association according to the preceding claim, characterized in that the composite cathode element contains, as electrically conductive fibres, carbon or graphite fibres whose length distribution is monodisperse.

12. Association according to either of Claims 10 and 11, characterized in that the fluoropolymer binding the fibres, both of the diaphragm and of the microporous fibrous sheet of the cathode element, is polytetrafluoroethylene.

13. Process for the preparation of a diaphragm according to any one of Claims 1 to 8, characterized in that it essentially includes the sequence of the following stages:
a) the preparation in an essentially aqueous medium of a dispersion including the fibres, the binder based on fluoropolymer in particle form, if appropriate at least one precursor of a gel of oxohydroxide of one of the metals of groups IVA, IVB, VB and VIB of the Periodic Classification or of the lanthanide and actinide series and iron, in particle form and, if appropriate, additives,
b) the deposition of a sheet by programmed vacuum filtration of the said dispersion through a porous material,
c) the removal of the liquid medium and, if appropriate, the drying of the sheet thus formed,
d) the sintering of the sheet, and
e) the treatment, if appropriate, in situ in the electrolysis conditions, with an aqueous solution of alkali metal hydroxide.

14. Process for the preparation of an association according to any one of Claims 9 to 12, characterized in that it essentially includes the sequence of the following stages:
a) the deposition of a sheet by programmed vacuum filtration of a dispersion, in an essentially aqueous medium, of fibres, of binder in particle form and, if appropriate, of additives, through an elementary cathode consisting of a metal surface exhibiting a mesh gap or perforations of between 20 µm and 5 mm,
b) the removal of the liquid medium and, if appropriate, the drying of the sheet thus formed,
c) the programmed vacuum filtration, through the sheet obtained previously, of a dispersion, in an essentially aqueous medium, of polytetrafluoroethylene fibres, of inorganic fibres chosen from carbon, graphite, titanate fibres or their mixtures, of binder based on a fluoropolymer in particle form, if appropriate at least one precursor of a gel of oxohydroxide of at least one of the metals of groups IVA, IVB, VB and VIB of the Classification or of the lanthanide or actinide series and iron, in particle form and, if appropriate, additives,
d) the removal of the liquid medium and, if appropriate, the drying of the sheet thus formed,
e) the sintering of the whole, and
f) the treatment, if appropriate, in situ, in the electrolysis conditions, with an aqueous solution of alkali metal hydroxide.

15. Process according to either of Claims 13 and 14, characterized in that the precursor of an oxohydroxide gel is chosen from the salts of metals of groups IVA, IVB, VB and VIB of the Periodic Classification or of the lanthanide or actinide series and iron, which are as insoluble as possible in water, the anion of which is chosen from the phosphate, pyrophosphate, hydrogenphosphate or polyphosphate anions, if appropriate substituted with an alkali metal, and silicate.

16. Process according to the preceding claim, characterized in that the precursor is α-TiP or α-ZrP.
